# EUROPÄISCHE PATENTANMELDUNG

(11) **EP 0 856 667 A2**
(43) Veröffentlichungstag der Anmeldung: **05.08.1998**
(21) Anmeldenummer: 98101767.6
(22) Anmeldetag: 02.02.1998
(51) Int. Cl.: F15B 1/26

(54) **Tankanordnung**

(30) Priorität: 03.02.1997 DE 29701824 U
(71) Anmelder: STILL GMBH, D-22113 Hamburg (DE)
(72) Erfinder: Neumann, Udo, 22946 Brunsbek (DE)
(74) Vertreter: Kasseckert, Rainer

(57) **Zusammenfassung**

Gegenstand der Erfindung ist eine Tankanordnung, insbesondere für eine Hydraulikanlage, mit einem in einen Tank (2) ragenden Saugrohr (1), einem innerhalb des Saugrohrs (1) angeordneten Filterelement (6) und einem das Saugrohr (1) gegenüber der Umgebung abschließenden Saugrohrdeckel (8). Erfindungsgemäß ist das Saugrohr (1) lösbar mit dem Tank (2) verbunden. Das Saugrohr (1) ist durch eine auf der Tankoberseite angeordnete Öffnung in den Tank (2) einsteckbar und ist gegenüber dem Tank (2) mittels einer ersten Dichtung, vorzugsweise mittels eines O-Rings (11), abdichtbar.

## Beschreibung

Die Erfindung betrifft eine Tankanordnung, insbesondere für eine Hydraulikanlage, mit einem in einen Tank ragenden Saugrohr, einem innerhalb des Saugrohrs angeordneten Filterelement und einem das Saugrohr gegenüber der Umgebung abschließenden Saugrohrdeckel.

Tankanordnungen dieser Art werden häufig in Arbeitsmaschinen, wie z.B. Flurförderzeugen, als Teil einer Hydraulikanlage eingesetzt. Die in dem Tank befindliche Flüssigkeit, im genannten Anwendungsbeispiel handelt es sich um Hydrauliköl, wird aus dem im wesentlichen drucklosen Tank durch das Saugrohr angesaugt und durchströmt dabei zwangsweise das Filterelement. Der Saugrohrdeckel verschließt das Saugrohr gegenüber der Umgebung und weist einen Anschluß für eine Hydraulikleitung auf.

Um eine dichte Verbindung zwischen Saugrohr und Tank herzustellen, ist bei gattungsgemäßen Tankanordnungen des Standes der Technik das Saugrohr über den gesamten Umfang mit dem Tank verschweißt. Infolge unterschiedlicher Wandstärken von Tank und Saugrohr besteht jedoch die Gefahr von Rißbildung im Bereich der Schweißnaht. Aus diesem Grund neigen bekannte Tankanordnungen in der Umgebung der Schweißnaht zu Undichtheit, die zum Teil erst während des Betriebs der Arbeitsmaschine infolge von Stößen und Schwingungen zu Tage tritt.

Der vorliegenden Erfindung liegt die Aufgabe zugrunde, einen Tank zur Verfügung zu stellen, bei dem eine dauerhaft dichte Verbindung zwischen Saugrohr und Tank gewährleistet ist.

Diese Aufgabe wird erfindungsgemäß dadurch gelöst, daß das Saugrohr lösbar mit dem Tank verbunden ist. Ein beschädigtes Saugrohr kann hierbei durch ein Austauschteil ersetzt werden. Durch die lösbare Anordnung des Saugrohrs am Tank kann auf die Schweißnaht verzichtet werden, in deren Umgebung, wie oben beschrieben, häufig undichte Stellen auftreten.

In einer vorteilhaften Ausgestaltung ist dabei das Saugrohr durch eine auf der Tankoberseite angeordnete Öffnung in den Tank einsteckbar und ist das Saugrohr gegenüber dem Tank mittels einer ersten Dichtung, vorzugsweise mittels eines O-Rings, abdichtbar. Die Öffnung des Tanks hat dabei einen geringfügig größeren Durchmesser als die Außenfläche des Saugrohrs. Im Bereich der Dichtung weist das Saugrohr hingegen einen größeren Durchmesser als die Öffnung des Tanks auf. Bei Beschädigung der Dichtung kann diese einfach ausgetauscht werden. Die Dichtung ist, insbesondere bei Verwendung eines O-Rings, in der Lage, geringfügige Form- und Lagetoleranzen des Saugrohrs auszugleichen.

Zweckmäßig ist es weiterhin, wenn der Saugrohrdeckel gegenüber dem Saugrohr mittels einer zweiten Dichtung, vorzugsweise mittels einer Flachdichtung, abdichtbar ist. Das Saugrohr wird nach oben mit dem Saugrohrdeckel abgeschlossen, welcher einen Anschluß für ein Rohr oder einen Schlauch aufweist. Hierbei kann ein Saugrohrdeckel entsprechend einer Tankanordnung des Standes der Technik verwendet werden, der in der Regel mit Flachdichtungen gegenüber dem Saugrohr abdichtbar ist.

Gemäß einer vorteilhaften Weiterbildung der Erfindung ist der Saugrohrdeckel mittels einer im wesentlichen parallel zu der Mittelachse des Saugrohrs angeordneten Zugstange befestigbar, wobei das dem Saugrohrdeckel entgegengesetzte Ende der Zugstange lösbar mit dem Tank verbunden ist. Durch die lösbare Verbindung des Saugrohrs mit dem Tank kann dieses erforderlichenfalls, z.B. bei Beschädigung eines Gewindes, ebenfalls ausgetauscht werden. Es wird dabei eine auf die Zugstange wirkende Zugkraft erzeugt, die am unteren Ende der Zugstange am Tank abgestützt wird. An dem oberen Ende der Zugstange wird die Gegenkraft von einer Mutter über den Saugrohrdeckel, die zweite Dichtung, das Saugrohr und die erste Dichtung an dem Tank abgestützt.

Mit besonderem Vorteil ist das dem Saugrohrdeckel entgegengesetzte Ende der Zugstange mittels einer Gewindeverbindung an der Tankunterseite befestigt.

Zweckmäßig ist es hierbei, wenn an der Tankunterseite eine Gewindehülse angeordnet ist, mit welcher die Zugstange verschraubt ist. Die Gewindehülse ist vorzugsweise an der Tankunterseite angeschweißt.

In einer günstigen Weiterbildung ist die Gewindeverbindung an dem unteren Ende der Zugstange mit Klebstoff gesichert. Hierdurch ist sichergestellt, daß bei einem Lösen der Mutter an dem oberen Ende der Zugstange stets die Mutter, nicht aber die Gewindeverbindung an dem unteren Ende der Zugstange gelöst wird.

Weitere Vorteile und Einzelheiten der Erfindung werden anhand des in den schematischen Figuren dargestellten Ausführungsbeispiels näher erläutert. Dabei zeigt
- Figur 1: eine gattungsgemäße Tankanordnung des Standes der Technik,
- Figur 2: eine erfindungsgemäße Tankanordnung.

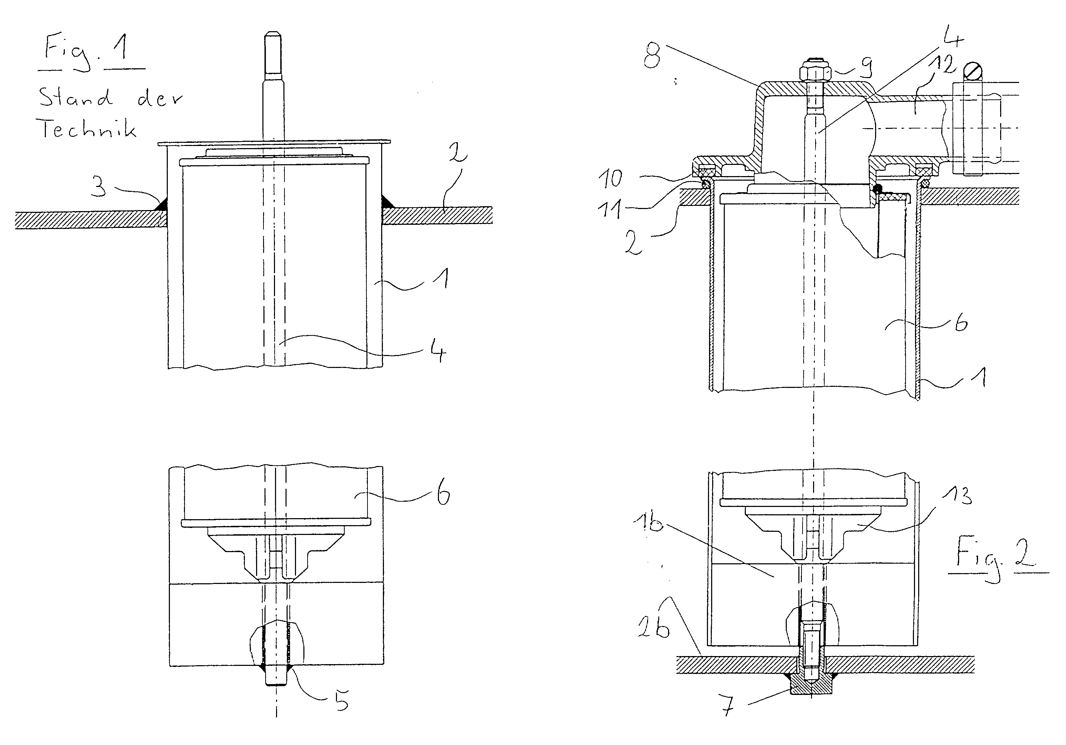

Figur 1 zeigt eine gattungsgemäße Tankanordnung des Standes der Technik. Bei dieser Anordnung ist ein Saugrohr 1 in die Oberseite eines Tanks 2 eingesetzt. Die Befestigung des Saugrohrs 1 sowie die Abdichtung der Trennfuge zwischen Saugrohr 1 und Tank 2 erfolgt mittels einer Schweißnaht 3. An dem unteren Ende des Saugrohrs 1 ist eine Zugstange 4 mittels einer weiteren Schweißnaht 5 befestigt. Auf die Zugstange 4 kann von oben ein zylindrisches Filterelement 6 aufgeschoben werden, welches durch die Zugstange 4 in der Mitte des Saugrohrs 1 zentriert ist. Nicht dargestellt ist in Figur 1 ein Saugrohrdeckel, der mittels einer auf die Zugstange 4 aufgeschraubten Mutter von oben auf das Saugrohr gedrückt wird.

Diese Anordnung weist den Nachteil auf, daß im Bereich der Schweißnaht 3 infolge der unterschiedlichen Wandstärken von Tank 2 und Saugrohr 1 häufig undichte Stellen entstehen. Darüber hinaus ist das Anbringen der Schweißnaht 3 ein aufwendiger Arbeitsschritt. Weiterhin beinhaltet diese Konstruktion den Nachteil, daß das Saugrohr 1 oder die Zugstange 4 nur mit sehr großem Aufwand ausgetauscht werden können.

Diese Nachteile werden bei der erfindungsgemäßen Tankanordnung gemäß Figur 2, in diesem Ausführungsbeispiel eine Tankanordnung für Hydrauliköl, vermieden. Das Saugrohr 1 ist bei dieser Anordnung in eine Öffnung an der Oberseite des Tanks 2 lösbar eingesteckt. An der Unterseite 2b des Tanks ist eine Gewindehülse 7 dichtend angeschweißt. In diese Gewindehülse 7 ist die Zugstange 4 eingeschraubt und mit Klebstoff gesichert. Im seinem unteren Bereich 1b ist das Saugrohr 1 gegenüber der Zugstange 4 zentriert.

Ein Saugrohrdeckel 8 ist von oben auf das Saugrohr 1 aufgesetzt und mit einer auf der Zugstange 4 aufgeschraubten Mutter 9 angedrückt und fixiert. Der Saugrohrdeckel 8 ist hierbei gegenüber dem Saugrohr 1 mit einer Flachdichtung 10, sowie das Saugrohr 1 gegenüber dem Tank 2 mit einem O-Ring 11 abgedichtet. Der Saugrohrdeckel 8 weist ein Anschlußstück 12 für ein Rohr oder einen Schlauch auf.

Das Anschlußstück 12 des Saugrohrdeckels 8 ist mit der oberen axialen Öffnung des Filterelements 6 verbunden. Die untere axiale Öffnung des Filterelements 6 hingegen ist mit einem geeigneten Aufsatzstück 13 verschlossen. Hydrauliköl, das aus dem Tank 2 angesaugt wird, tritt bei dieser Anordnung im unteren Bereich des Saugrohrs 1 in das Saugrohr 1 ein und durchströmt die Mantelflächen des Filterelements 6 von Außen nach Innen. Von dort gelangt das Hydrauliköl in den Saugrohrdeckel 8 und das Anschlußstück 12.

Gegenüber dem Stand der Technik zeichnet sich die erfindungsgemäße Tankanordnung durch wesentlich vereinfachte Herstellung und Wartung, sowie eine erhöhte Ausfallsicherheit aus.

## Patentansprüche

1. Tankanordnung, insbesondere für eine Hydraulikanlage, mit einem in einen Tank (2) ragenden Saugrohr (1), einem innerhalb des Saugrohrs (1) angeordneten Filterelement (6) und einem das Saugrohr (1) gegenüber der Umgebung abschließender Saugrohrdeckel (8), **dadurch gekennzeichnet**, daß das Saugrohr (1) lösbar mit dem Tank (2) verbunden ist.

2. Tankanordnung nach Anspruch 1, dadurch gekennzeichnet, daß das Saugrohr (1) durch eine auf der Tankoberseite angeordnete Öffnung in den Tank (2) einsteckbar ist und das Saugrohr (1) gegenüber dem Tank (2) mittels einer ersten Dichtung, vorzugsweise mittels eines O-Rings (11), abdichtbar ist.

3. Tankanordnung nach Anspruch 1 oder 2, dadurch gekennzeichnet, daß der Saugrohrdeckel (8) gegenüber dem Saugrohr (1) mittels einer zweiten Dichtung, vorzugsweise mittels einer Flachdichtung (10), abdichtbar ist.

4. Tankanordnung nach einem der Ansprüche 1 bis 3, dadurch gekennzeichnet, daß der Saugrohrdeckel (8) mittels einer im wesentlichen parallel zu der Mittelachse des Saugrohrs (1) angeordneten Zugstange (4) befestigbar ist, wobei das dem Saugrohrdeckel (8) entgegengesetzte Ende der Zugstange (4) lösbar mit dem Tank (2) verbunden ist.

5. Tankanordnung nach Anspruch 4, dadurch gekennzeichnet, daß das dem Saugrohrdeckel (8) entgegengesetzte Ende der Zugstange (4) mittels einer Gewindeverbindung an der Tankunterseite (2b) befestigt ist.

6. Tankanordnung nach Anspruch 5, dadurch gekennzeichnet, daß an der Tankunterseite eine Gewindehülse (7) angeordnet ist, mit welcher die Zugstange (4) verschraubt ist.

7. Tankanordnung nach einem der Ansprüche 5 bis 6, dadurch gekennzeichnet, daß die Gewindeverbindung an dem unteren Ende der Zugstange (4) mit Klebstoff gesichert ist.
